# EUROPÄISCHE PATENTANMELDUNG

(11) **EP 3 330 056 A1**
(43) Veröffentlichungstag der Anmeldung: **06.06.2018**
(21) Anmeldenummer: 17198029.5
(22) Anmeldetag: 24.10.2017
(51) Int. Cl.: B29C 47/00, F16L 17/04

(54) **VERFAHREN ZUR HERSTELLUNG EINES DICHTUNGSRINGS MIT EINEM DICHTUNGSPROFIL UND DICHTUNGSRING**

(30) Priorität: 02.12.2016 DE 102016123296
(71) Anmelder: Semperit AG Holding, 1031 Wien (AT)
(72) Erfinder: Mießbacher, Herwig, 8734 Großlobming (AT)
(74) Vertreter: Müller Schupfner & Partner Patent- und Rechtsanwaltspartnerschaft mbB

(57) **Zusammenfassung**

Die vorliegenden Erfindung schlägt ein Verfahren zur Herstellung eines Dichtungsrings mit einem Dichtungsprofil vor, insbesondere zur Herstellung eines Dichtungsrings für ein Rohr oder für ein zusammensteckbares Rohrsystem, umfassend die Verfahrensschritte:
-- Extrudieren eines Teilstreifens mit einem Teilprofil in Profilrichtung
-- Zusammensetzen mehrerer Teilstreifen in einer senkrecht zur Profilrichtung verlaufenden Querrichtung unter Bildung des Dichtungsprofils und
-- Formen eines Rings aus dem Teilstreifen oder mehreren zusammengesetzten Teilsteifen.

## Beschreibung

Die vorliegende Erfindung betrifft ein Verfahren zur Herstellung eines Dichtungsrings mit einem Dichtungsprofil und einen Dichtungsring.

Dichtungsringe sind aus dem Stand der Technik hinlänglich bekannt. Typischerweise dienen solche Dichtungsringe dazu, in einem Schnittstellenbereich, in dem Rohre oder ein Rohr mit einer Rohrmuffe miteinander verbunden werden, einen dichtenden Zusammenhalt sicherzustellen. Hierzu umfassen die Dichtungsringe üblicherweise ein Dichtungsprofil in Gestalt von Dichtungslippen. Üblicherweise wird ein solcher Dichtungsring hergestellt, indem er als Streifen extrudiert wird und aus dem extrudierten Streifen im Anschluss ein Ring, nämlich der Dichtungsring, geformt wird. Hierbei wird der Streifen zu einem Ring gebogen und beide Enden des Streifens werden in einem im Wesentlichen axial verlaufenden Verbindungsbereich miteinander verknüpft. Mit zunehmender Größe der Dichtungsringe ergeben sich allerdings im Herstellungsprozess, insbesondere beim Extrudieren, Schwierigkeiten, denen im Stand der Technik mit speziell angefertigten Extrusionslinien entgegengetreten wird. Jedoch gestaltet sich eine Handhabe solcher Sonder-Extrusionslinien als herausfordernd, so dass der Herstellungsprozess zur Sicherung von vergleichsweise geringen Ausschussraten nicht ausreichend beherrscht bzw. kontrolliert werden kann.

Es ist somit eine Aufgabe der vorliegenden Erfindung, ein Verfahren zur Herstellung eines Dichtungsrings und einen Dichtungsring bereitzustellen, die einen gegenüber dem Stand der Technik vereinfachten Herstellungsprozess zulassen.

Die vorliegende Erfindung löst die Aufgabe durch ein Verfahren zur Herstellung eines Dichtungsrings gemäß Anspruch 1 sowie durch einen Dichtungsring gemäß Anspruch 10. Weitere Vorteile und Merkmale der Erfindung ergeben sich aus den Unteransprüchen sowie der Beschreibung und den beigefügten Figuren.

Erfindungsgemäß ist ein Verfahren zur Herstellung eines Dichtungsrings mit einem Dichtungsprofil, insbesondere zur Herstellung eines Dichtungsrings für ein Rohr oder für ein zusammensteckbares Rohrsystem, vorgesehen, umfassend die Verfahrensschritte:
-- Extrudieren eines Teilstreifens mit einem Teilprofil in Profilrichtung,
-- Zusammensetzen mehrerer Teilstreifen, vorzugsweise zumindest zweier in einer senkrecht zur Profilrichtung verlaufenden Querrichtung unter Bildung des Dichtungsprofils und
-- Formen eines Rings aus dem Teilstreifen oder mehreren zusammengesetzten Teilsteifen.

Gegenüber den aus dem Stand der Technik bekannten Verfahren ist es erfindungsgemäß vorgesehen, dass zunächst einzelne Teilstreifen extrudiert werden und im Anschluss aus den Teilsteifen der Dichtungsring entsteht. Eine solche Segmentierung hat den Vorteil, dass sich die Profilbreite beim Extrudieren der einzelnen Teilstreifen reduzieren lässt. Entsprechend kann auf Sonder-Extrusionslinien mit Überbreiten verzichtet werden und die Handhabe der extrudierten Teilstreifen wird vereinfacht. Dies hat außerdem den positiven Effekt, dass sowohl Extrusionswerkzeuge als auch Stoßwerkzeuge zum Verbinden eines Teilstreifens zu einem Ringnicht überdimensioniert bereitgestellt werden müssen. Vorzugweise werden die gefertigten Dichtungsringe in Schnittstellenbereichen zwischen zwei Rohren oder zwischen einem Rohr und einer Rohrmuffe angeordnet. Im Fall eines Systems aus einem Rohr und einer Rohrmuffe ummantelt die Rohrmuffe im Schnittstellenbereich das Rohr, wobei in radialer Richtung gesehen zwischen der Rohrmuffe und dem Rohr der Dichtungsring angeordnet ist. Es ist hierbei vorzugsweise vorgesehen, dass die Teilstreifen in ihrer Länge in Profilrichtung gesehen so dimensioniert werden, dass ein sich beim Formen des Rings aus dem Teilstreifen ergebender Innendurchmesser des Dichtungsrings bzw. eines Teilstreifenrings im Wesentlichen einem Außendurchmesser des Rohrs entspricht. Es ist auch vorstellbar, dass der Innendurchmesser des Dichtungsrings derartig kleiner realisiert wird als der Außendurchmesser des Rohrs, dass der Dichtungsring, insbesondere der elastische Dichtungsring, auf das Rohr aufschiebbar ist und der Dichtungsring wegen seiner elastischen Vorspannung gegen das Rohr gepresst wird. Weiterhin ist es bevorzugt vorgesehen, dass das Dichtungsprofil an einer Außenseite des Dichtungsrings angeordnet ist und dabei in radialer Richtung absteht. Grundsätzlich ist es zudem denkbar, dass zunächst Teilstreifen zusammengesetzt und anschließend zu einem Ring geformt werden, oder die einzelnen Teilstreifen zunächst zu Ringen, d. h. Teilstreifenringen, geformt und anschließend in axialer Richtung bzw. Querrichtung zusammengesetzt werden. Hierbei ist es insbesondere vorgesehen, dass die Teilstreifen Profilelemente mit einer in Profilrechnung bemessenen konstanten Breite sind.

Insbesondere ist es vorgesehen, dass der Teilstreifen eine erste Fügefläche, über die der Teilstreifen an einen anderen Teilsteifen gefügt wird, und eine zweite Fügefläche, über die der Teilstreifen zu einem Ring gefügt wird, aufweist. Dabei stehen die erste Fügefläche und die zweite Fügefläche vorzugsweise senkrecht zueinander. Insbesondere liegen sich zwei zweite Fügeflächen gegenüber und sind jeweils Teil eines zuerst extrudierten und eines zuletzt extrudierten Bereichs des Teilstreifens. Es ist auch vorstellbar, dass der Teilstreifen nur eine erste Fügefläche oder zwei gegenüberliegende Fügeflächen aufweist. Im Falle eines Teilstreifens mit nur einer Fügefläche bildet der Teilstreifen bevorzugt im zusammengesetzten Zustand des Dichtrings dessen Abschluss.

Weiterhin ist es vorgesehen, dass der Teilstreifen eine in Profilrichtung bemessene Länge und eine in Querrichtung bemessene Breite aufweist. Dabei ist es insbesondere vorgesehen, die Länge größer ist als die Breite, vorzugsweise 2,5 bis 15 mal, bevorzugt 5 bis 10 mal und besonderes bevorzugt 6 bis 8 mal so groß ist. Ferner ist es vorgesehen, dass die Profilierung eine in einer senkrecht zur Profilrichtung und senkrecht zur Querrichtung bemessene Profilhöhe aufweist. Insbesondere nimmt das Verhältnis zwischen der Profilhöhe zur Breite des Teilstreifens einen Wert zwischen 0,05 und 0,3, bevorzugt zwischen 0,06 und 0,1 und besonders bevorzugt zwischen 0,075 und 0,08 an.

Weiterhin ist es vorstellbar, dass zusätzlich mehrere Teilstreifen in Profilrichtung zusammengefügt werden, um einen größeren Dichtringdurchmesser zu realisieren. Beim Fügen der in Profilrichtung zusammengesetzten Teilstreifen in Querrichtung ist es bevorzugt vorgesehen, dass die Schnittstellen, die sich jeweils zwischen zwei in Profilrichtung zusammengefügten Teilstreifen ergeben, in Querrichtung gesehen nicht nebeneinander angeordnet sind.

Gemäß einer weiteren Ausführungsform der vorliegenden Erfindung ist vorgesehen, dass beim Extrudieren der Teilstreifen derart ausgestaltet wird, dass die zusammengesetzten Teilstreifen dichtend zusammenhalten insbesondere kraft-, form- und/oder stoffschlüssig dichtend zusammenhalten. D.h. beim Extrudieren wird bereits die Grundlage dazu geschaffen, dass die zusammengesetzten Teilstreifen dauerhaft zusammenhalten damit sie im Einsatz beispielsweise nicht auseinanderrutschen bzw. im Kontaktbereich der Teilstreifenringe eine Undichtigkeit entsteht. Hierzu wird ein Umfang des Teilstreifens in einer Schnittebene, die senkrecht zur Profilrichtung verläuft, entsprechend geformt oder strukturiert. Dabei muss solch eine Ausformung des Teilstreifens nicht zwingend in einem Kontaktbereich, in dem die Teilstreifen im gefertigten Dichtungsring einander kontaktieren, erfolgen, sondern kann auch in anderen sich am Umfang ersteckenden Teilbereichen lokalisiert sein.

Vorzugsweise sind die Teilprofile mehrerer Teilstreifen identisch. Dadurch bedarf es in vorteilhafter Weise nur eines einzelnen Extrusionswerkzeug, in dem die Teilstreifen nacheinander extrudiert werden. Hierbei werden vorzugsweise die einzelnen Teilstreifen zu Teilstreifenringen geformt und anschließend derart zueinander ausgerichtet, insbesondere um eine senkrecht zur axialen Richtung verlaufenden Drehachse um 180° gedreht, dass die über die Kontaktfläche aneinander anliegenden Teilstreifen das gewünschte Dichtungsprofil bilden. Insbesondere sind die Teilprofile der Teilstreifen im gefertigten Dichtungsring spiegelsymmetrisch zu einer durch die Kontaktfläche verlaufenden Spiegelebene. Alternativ ist es auch vorstellbar, dass zwischen den identisch ausgestalteten Teilstreifen zur Verlängerung des Dichtungsrings in axialer Richtung ein Zwischenelement, vorzugsweise mit eigenem Teilprofil, eingesetzt wird. Zusätzlich ist es denkbar, unterschiedliche Teilstreifen zu einem Dichtungsprofil zusammenzusetzten. Dadurch lässt sich dann beispielsweise ein asymmetrisches Dichtungsprofil aufbauen.

Vorzugsweise für eine rutschfeste Anordnung eines aus einem Teilstreifen geformten Teilstreifenrings oder des Dichtungsrings an einem Rohr ist es vorgesehen, dass beim Extrudieren am Teilstreifen auf einer dem Teilprofil gegenüberliegenden Seite eine Oberflächenstruktur, insbesondere eine Riffelstruktur, eine Noppenstruktur und/oder eine einen Hinterschnitt aufweisende Oberflächenstruktur, ausgebildet bzw. realisiert wird. Dabei liegt diese Oberflächenstruktur im Einsatz am Rohr an und verhindert ein Verrutschen. Dadurch kann in vorteilhafter Weise auf ein zusätzliches Hilfsmittel zur Verbindung der mehreren Teilsteifen verzichtet werden. Vorzugsweise erstreckt sich die Oberflächenstruktur vollständig über die dem Teilprofil gegenüberliegenden Seite.

In einer weiteren bevorzugten Ausführungsform ist es vorgesehen, dass mehrere Teilstreifen zusammen mit mindestens einem die mehreren Teilstreifen verbindenden Brückenelement gemeinsam in einer Extrudiervorrichtung hergestellt werden, wobei insbesondere beim Zusammensetzen bzw. Anordnen der mehreren Teilstreifen zueinander zwei Teilstreifen mittels eines als Scharnier wirkenden Brückenelements umgeklappt werden. Dadurch lassen sich in vorteilhafter Weise die den Dichtungsring bildenden Teilstreifen in einem einzigen Extrudiervorgang realisieren, wodurch in der Herstellung Zeit gespart werden kann. Vorzugsweise sind die zusammen extrudierten Teilstreifen übereinander angeordnet. Hierbei ist es insbesondere vorgesehen, dass das Brückenelement nach dem Extrudieren und vor dem Umklappen in Querrichtung gesehen an Stirnseiten der beiden übereinanderliegenden Teilstreifen angeordnet ist. Das Brückenelement kann auch zwei Teilstreifen jeweils über Bereiche, die im übereinander angeordneten Zustand einander zugewandt sind, verbinden.

Dadurch wird eine Länge des Brückenelements im Wesentlichen durch den Abstand der übereinanderliegenden Teilstreifen entlang einer senkrecht zur Querrichtung und zur Profilrichtung verlaufenden Richtung bestimmt. Vorzugsweise wird das Extrudieren, insbesondere eine Profilgeometrie, derart ausgelegt, dass einerseits die Länge des Brückenelements ein Umklappen erlaubt und anderseits in einem auseinandergeklappten Zustand die Teilstreifen möglichst nah aneinander liegen. Weiterhin ist es vorgesehen, dass sich das Brückenelement vollständig über die Länge der Teilstreifen in Profilrichtung erstreckt. Besonders vorteilhaft liegt ein Verhältnis der Länge des Brückenelements zur Dicke bzw. Stärke eines Teilstreifens zwischen 0,1 bis 2,0, vorzugsweise zwischen 0,3 bis 1. Zur besseren Einhaltung einer gewünschten Profilgeometrie kann das zusammengeklappte Profil als Hohlkammerprofil ausgebildet werden.

Ergänzend oder alternativ ist es beispielsweise auch vorstellbar, dass ein beim Extrudieren als Stützsteg dienendes Brückenelement zeitlich vor dem Zusammensetzen bzw. Anordnen bzw. Positionieren zerstört wird. Mittels des Stützstegs lässt sich das System der beim Extrudieren übereinanderliegenden Teilstreifen stabilisieren. Im Anschluss an das Extrudieren und zeitlich vor einem Umklappen lässt sich das als Stützsteg dienende Brückenelement abreißen. Vorzugsweise sind ein als Scharnier dienendes Brückenelement und ein als Stützsteg dienendes Brückenelement in Querrichtung gesehen an einander gegenüberliegenden Seiten der zusammen extrudierten und übereinanderliegenden Teilstreifen angeordnet.

Vorzugsweise ist es vorgesehen, dass neben dem Teilstreifen ein weiterer Teilstreifen extrudiert wird, wobei der Teilstreifen und der weitere Teilstreifen beim Zusammensetzen zur Vermeidung eines axialen Relativversatzes zwischen dem Teilstreifen und dem weiteren Teilstreifen im gefertigten Dichtungsring über jeweilige Kontaktflächen des Teilstreifens und des weiteren Teilstreifens form- und/oder kraft- und/oder stoffschlüssig miteinander verbunden werden. Dadurch lässt sich in vorteilhafter Weise ein dauerhafter und stabiler Zusammenhalt zwischen dem Teilstreifen und dem weiteren Teilstreifen realisieren. Beispielsweise werden die Kontaktflächen über einen im Bereich der Kontaktflächen aufgetragenen Klebstoff miteinander verbunden.

Es ist aber auch vorstellbar, dass die Kontaktflächen des Teilstreifens und des weiteren Teilstreifens zumindest bereichsweise aufgeschmolzen werden, anschließend in Kontakt gebracht werden und dann zusammen aushärten.

Gemäß einer weiteren Ausführungsform der vorliegenden Erfindung ist vorgesehen, dass beim Extrudieren für eine form- und/oder kraftschlüssige Verbindung am Teilstreifen und am weiteren Teilstreifen komplementäre Kontaktflächen realisiert bzw. vorgesehen werden. Insbesondere werden die Kontaktflächen derart ausgestaltet, dass sie im zusammengesetzten Zustand des Teilstreifens und des weiteren Teilstreifens ineinandergreifen, vorzugsweise passgenau ineinandergreifen. Insbesondere sind die Kontaktflächen derart ausgestaltet, dass sie im Sinne eines Schlüssel-Schloss-Prinzips ineinandergreifen. Vorteilhaft ist hierbei ferner, dass die komplemetär zueinander ausgestalteten Kontaktflächen beim Zusammensetzen die Ausrichtung des Teilstreifens und des weiteren Teilstreifens, insbesondere in einer senkrecht zur Profilrichtung und senkrecht zur Querrichtung verlaufenden Richtung, unterstützt. Mit anderen Worten: Die komplementär zueinander ausgestalteten Kontaktflächen sind zur Vermeidung eines unerwünschten Höhenversatzes der Teilstreifen geeignet, wenn die Teilstreifen zur Bildung des Dichtungsprofils zueinander ausgerichtet werden. Ferner ist es vorstellbar, dass zur Bildung komplementärer Kontaktflächen in einem Zwischenschritt ein konturbildendes Einsatzteil an dem Teilstreifen angeordnet wird. Beispielsweise ist es dann möglich, zunächst zwei identische Teilstreifen, mit einem zumindest teilweise zurückspringen Konturverlauf entlang der Kontaktfläche, bereitzustellen, wobei anschließend das Einsatzteil in den Bereich mit dem zurückspringen Konturverlauf eingesetzt wird. Zur Materialeinsparung erstreckt sich das Einsatzteil vorteilhaft nicht über eine volle Länge der Teilstreifen in Profilrichtung.

Vorteilhafterweise wird bzw. ist zur Bildung komplementärer Kontaktflächen in einem Zwischenschritt ein konturbildendes Einsatzteil an dem Teilstreifen angeordnet.

Vorteilhaft ist es insbesondere, wenn beim Extrudieren an der Kontaktfläche zumindest eine Hinterschneidung und/oder zumindest ein Vorsprung vorgesehen wird. Dadurch lässt sich eine besonders stabile Verbindung zwischen dem Teilstreifen und dem weiteren Teilstreifen realisieren. Hierbei sind die Vorsprünge insbesondere derart gestaltet, dass der in die Hinterschneidung eingreifende Vorsprung einen Formschluss in axialer Richtung bzw. in Querrichtung bewirkt. Weiterhin ist es hierbei vorgesehen, dass der Vorsprung eines Teilstreifens in eine Hinterschneidung des weiteren Teilstreifens in Profilrichtung eingeschoben wird. Dadurch bildet die Hinterschneidung in vorteilhafter Weise eine Führung bzw. einen Führungskanal, mit dem sich das Zusammensetzen des Teilstreifens und des weiteren Teilstreifens vereinfachen lässt.

Gemäß einer weiteren Ausführungsform der vorliegenden Erfindung ist vorgesehen, dass das Dichtungsprofil ein System aus Dichtlippen bildet, wobei im zusammengesetzten Zustand die Kontaktflächen zweier Teilstreifen oder die Kontaktfläche des Teilstreifens und des weiteren Teilstreifens im Bereich einer Dichtungslippe angeordnet sind. Dadurch wird den beiden zusammengesetzten Teilstreifen eine möglichst große Anlagefläche bereitgestellt. Dabei sind die Kontaktflächen vorzugsweise in axialer Richtung gesehen mittig in bzw. an der Dichtlippe angeordnet. Vorzugsweise ist die die Kontaktfläche(n) aufweisende Dichtlippe in axialer Richtung gesehen die breiteste Dichtlippe. Dadurch lässt sich die Anlagefläche der Teilstreifen weiter unterstützen. Weiterhin ist es vorgesehen, dass die Dichtlippen in radialer Richtung mehr als 10 mm, bevorzugt mehr als 15 mm und besonders bevorzugt mehr als 20 mm abstehen. Weiterhin ist es vorstellbar, dass der gefertigte Dichtungsring an seinen in axialer Richtung betrachten Endbereichen radial nach außen gewölbt ist, wobei die Wölbung beim Extrudieren der Teilstreifen realisiert bzw. geschaffen bzw. erzeugt wird.

Vorzugsweise ist es vorgesehen, dass die Teilstreifenringe am Rohr oder an einer Rohrmuffe zusammengesetzt werden. Hierbei ist es insbesondere vorgesehen, dass die einzelnen Teilstreifenringe nacheinander am Rohr befestigt werden. Zur Vermeidung eines axialen Verschiebens des Teilstreifenrings ist es ferner vorstellbar, dass ein oder mehrere Teilstreifenringe am Rohr oder der Rohrmuffe zumindest teilweise eingegossen werden. Beispielsweise wird hierzu eine stoffschlüssige Verbindung des Teilstreifenrings mit dem Rohr durch ein Harz, ein Gewebe, ein Klebestoff oder Vergleichbares realisiert.

Bevorzugterweise erstreckt sich der Dichtungsring in axialer Richtung mehr als 150 mm, bevorzugt mehr als 200 mm und besonders bevorzugt mehr als 250 mm. Für solch große Dichtungsringe erweist sich das Verfahren als besonders vorteilhaft, da ein Segmentieren in Teilstreifen es gestattet, auf Extrudiervorrichtungen mit Überbreiten zu verzichten. Vorzugsweise haben die Dichtungsringe einen Durchmesser, der größer ist als 1000 mm, bevorzugt größer als 1250 mm und besonders bevorzugt größer als 1500 mm.

Die Lösung der Aufgabe gelingt ebenfalls mit einem Dichtungsring gemäß den vorhergehenden Ausführungen. Sämtliche für das erfindungsgemäße Verfahren beschriebenen Merkmale und deren Vorteile lassen sich sinngemäß ebenfalls auf den erfindungsgemäßen Dichtungring übertragen und andersrum.

Erfindungsgemäß ist hierbei ein Dichtungsring vorgesehen, der einen sich in Umlaufrichtung erstreckenden Verbindungsbereich aufweist. Bevorzugt ist es vorgesehen, dass es zudem einen in axialer Richtung verlaufenden Verbindungsbereich gibt. Vorzugsweise sind der axiale Verbindungsbereich und der umlaufende Verbindungsbereich unter Bildung eines Winkels, insbesondere von 90 °, zueinander ausgerichtet. Hierbei gibt insbesondere der sich in Umlaufrichtung erstreckende Verbindungsbereich Zeugnis ab von einer bei der Herstellung erfolgten Segmentierung in Teilstreifen. Dabei ist der sich in Umlaufrichtung erstreckende Verbindungsbereich festgelegt durch die Position der Kontaktflächen der einzelnen zur Herstellung verwendeten Teilstreifen. Vorzugsweise liegt der sich in Umlaufrichtung erstreckende Verbindungsbereich im Bereich einer Dichtungslippe, beispielsweise in einer in axialer Richtung gesehen zentralen Dichtungslippe, oder der sich in Umlaufrichtung erstreckende Verbindungsbereich liegt in einer Symmetrieebene, zu der der Dichtungsring spiegelsymmetrisch ausgestaltet ist. Weiterhin ist es vorstellbar, dass der Verbindungsbereich Konturverläufe aufweist, die einzelnen Teilstreifen bzw. Teilstreifenringen zuzuordnen sind. Ferner ist es vorstellbar, dass der Dichtungsring eine Abrisskante aufweist, an der ein als Stützsteg genutztes Brückenelement abgerissen wurde.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden. Es zeigen:

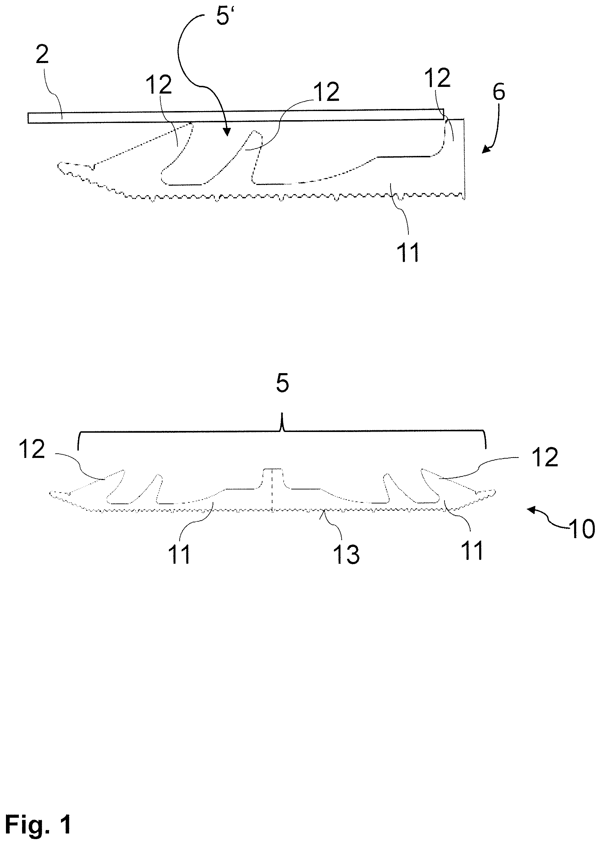

- **Fig.1:**: ein Teilstreifen (oben) und ein aus mehreren Teilstreifen zusammengesetzten Dichtungsring (unten), hergestellt mit einem Verfahren gemäß einer ersten bevorzugten Ausführungsform der vorliegenden Erfindung, in einer Schnittansicht, deren Schnitt entlang einer senkrecht zur Profilrichtung verlaufenden Ebene verläuft.

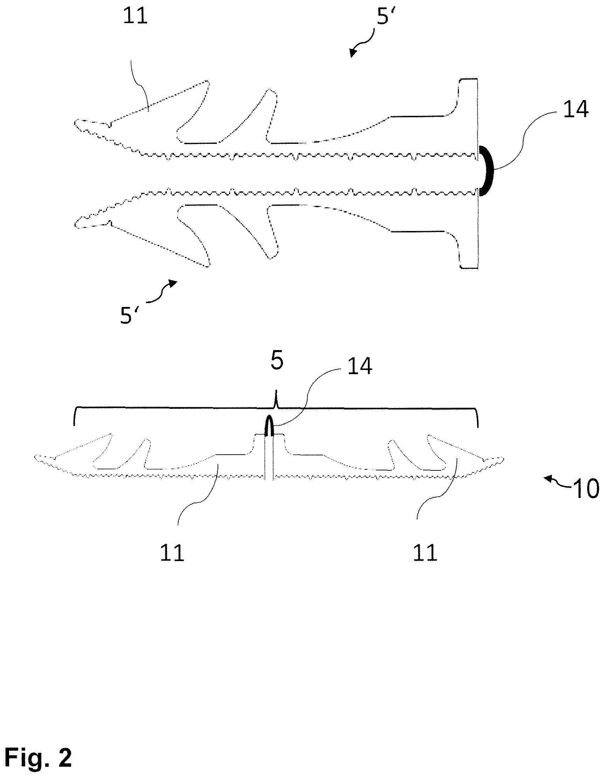

- **Fig. 2:**: zwei Teilstreifen (oben) und ein aus den zwei Teilstreifen zusammengesetzten Dichtungsring (unten), hergestellt mit einem Verfahren gemäß einer zweiten bevorzugten Ausführungsform der vorliegenden Erfindung, in einer Schnittansicht, deren Schnitt entlang einer senkrecht zur Profilrichtung verlaufenden Ebene verläuft.

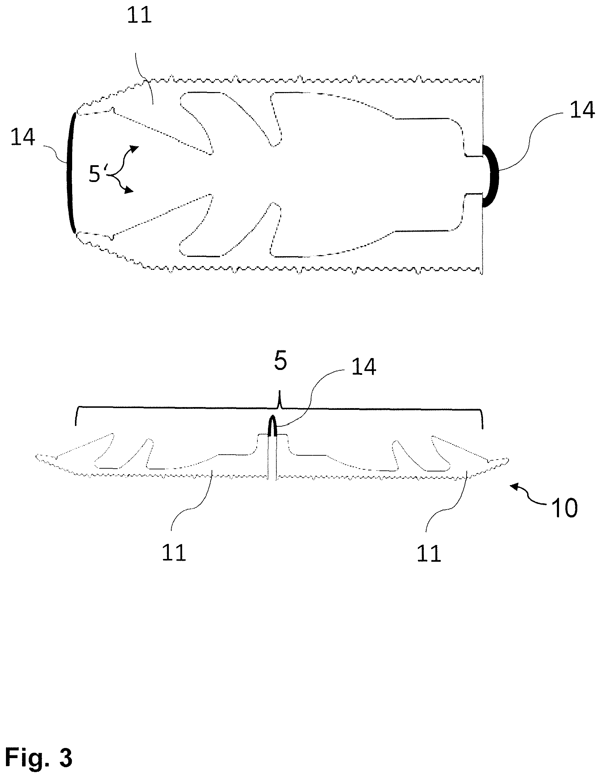

- **Fig. 3:**: zwei Teilstreifen (oben) und ein aus den zwei Teilstreifen zusammengesetzten Dichtungsring (unten), hergestellt mit einem Verfahren gemäß einer dritten bevorzugten Ausführungsform der vorliegenden Erfindung, in einer Schnittansicht, deren Schnitt entlang einer senkrecht zur Profilrichtung verlaufenden Ebene verläuft.

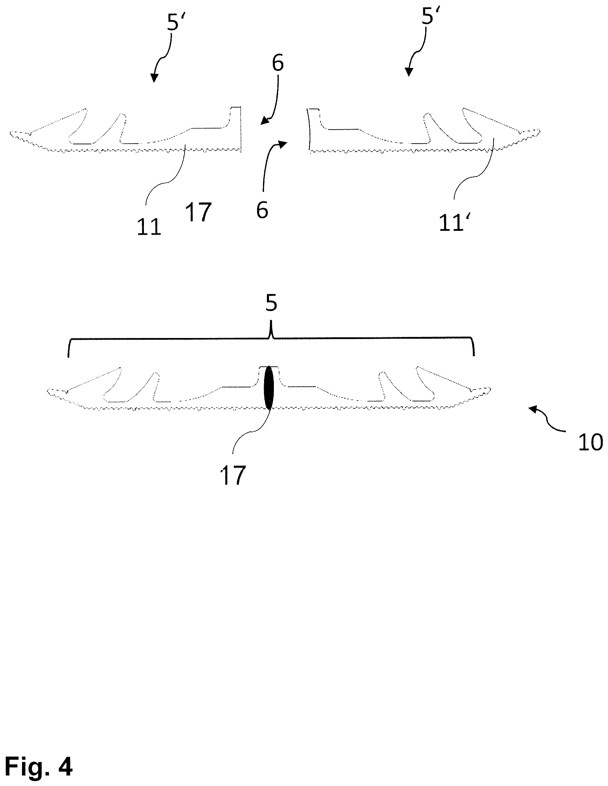

- **Fig.4:**: ein Teilstreifen und ein weiteren Teilstreifen (oben) sowie einen aus dem Teilstreifen und dem weiteren Teilstreifen zusammengesetzten Dichtungsring (unten), hergestellt mit einem Verfahren gemäß einer vierten bevorzugten Ausführungsform der vorliegenden Erfindung, in einer Schnittansicht, deren Schnitt entlang einer senkrecht zur Profilrichtung verlaufenden Ebene verläuft.

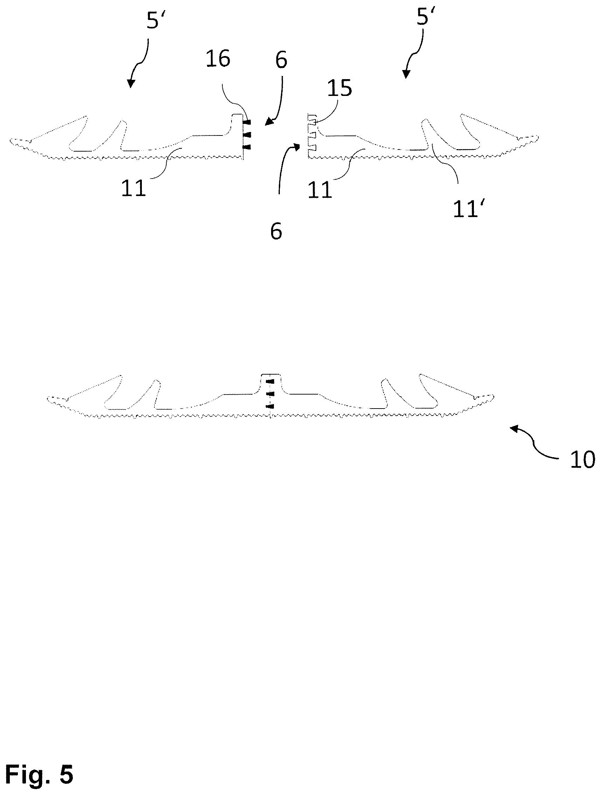

- **Fig.5:**: ein Teilstreifen und ein weiteren Teilstreifen (oben) sowie einen aus dem Teilstreifen und dem weiteren Teilstreifen zusammengesetzten Dichtungsring (unten), hergestellt mit einem Verfahren gemäß einer fünften bevorzugten Ausführungsform der vorliegenden Erfindung, in einer Schnittansicht, deren Schnitt entlang einer senkrecht zur Profilrichtung verlaufenden Ebene verläuft.

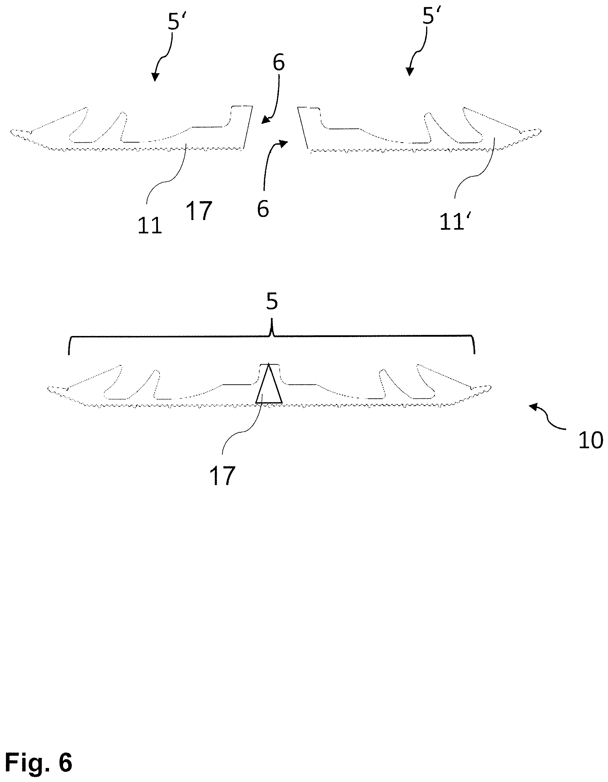

- **Fig.6:**: ein Teilstreifen und ein weiteren Teilstreifen (oben) sowie einen aus dem Teilstreifen und dem weiteren Teilstreifen zusammengesetzten Dichtungsring (unten), hergestellt mit einem Verfahren gemäß einer sechsten bevorzugten Ausführungsform der vorliegenden Erfindung, in einer Schnittansicht, deren Schnitt entlang einer senkrecht zur Profilrichtung verlaufenden Ebene verläuft.

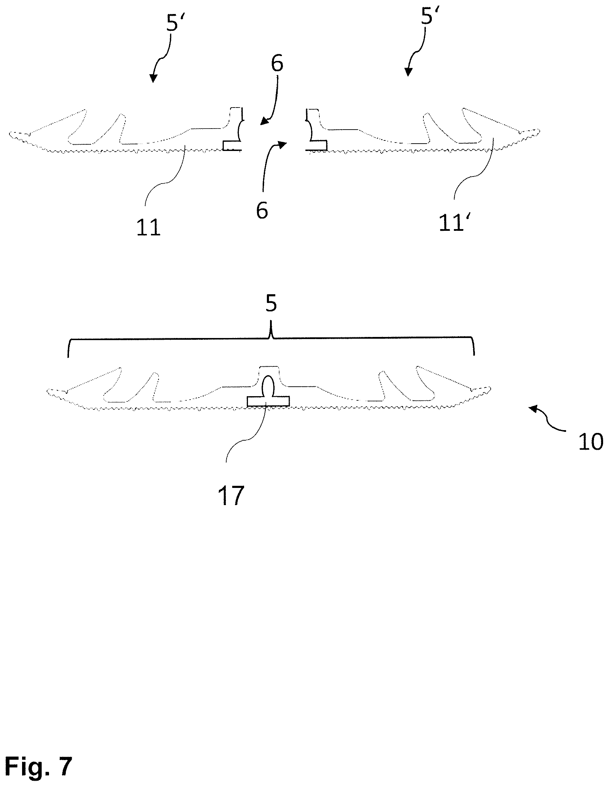

- **Fig.7:**: ein Teilstreifen und ein weiteren Teilstreifen (oben) sowie einen aus dem Teilstreifen und dem weiteren Teilstreifen zusammengesetzten Dichtungsring (unten), hergestellt mit einem Verfahren gemäß einer siebten bevorzugten Ausführungsform der vorliegenden Erfindung, in einer Schnittansicht, deren Schnitt entlang einer senkrecht zur Profilrichtung verlaufenden Ebene verläuft.

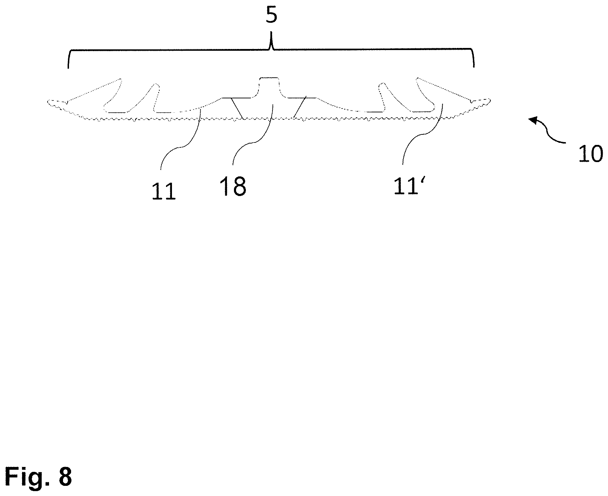

- **Fig.8:**: ein Teilstreifen und ein weiteren Teilstreifen (oben) sowie einen aus dem Teilstreifen und dem weiteren Teilstreifen zusammengesetzten Dichtungsring (unten), hergestellt mit einem Verfahren gemäß einer achten bevorzugten Ausführungsform der vorliegenden Erfindung, in einer Schnittansicht, deren Schnitt entlang einer senkrecht zur Profilrichtung verlaufenden Ebene verläuft.

In den verschiedenen Figuren sind gleiche Teile stets mit den gleichen Bezugszeichen versehen und werden daher in der Regel auch jeweils nur einmal benannt bzw. erwähnt.

In **Figur 1** sind ein Teilstreifen 11 (oben) und ein aus mehreren Teilstreifen 11 zusammengesetzter Dichtungsring 10 (unten), hergestellt mit einem Verfahren gemäß einer ersten bevorzugten Ausführungsform der vorliegenden Erfindung, in einer Schnittansicht, deren Schnitt entlang einer senkrecht zur Profilrichtung verlaufenden Ebene verläuft, dargestellt. Insbesondere handelt es sich um einen Dichtungsring 10, der für Rohre 2 oder ein zusammensteckbares Rohrsystem vorgesehen ist. Vorzugsweise soll der Dichtungsring 10 dabei für eine dichtende Verknüpfung in einem Schnittstellenbereich zwischen zwei Rohren 2 oder einem Rohr 2 und einer Rohrmuffe sorgen. Hierzu liegt der Dichtungsring 10 beispielsweise im verbauten Zustand an einem Rohr 2 an und vom Dichtungsring 10 abstehende Dichtlippen 12 überbrücken einen Bereich zwischen dem Rohr und der Rohrmuffe. Die Dichtlippen 12 bilden dabei ein Dichtungsprofil 5, das vorzugweise am gefertigten Dichtungsring an einer Innenseite oder Außenseite des Dichtungsrings 10 umlaufend ausgestaltet ist. Grundsätzlich ist jede Form von Dichtungsprofil 5 vorstellbar. In dem in Figur 1 dargestellten Ausführungsbeispiel ist es vorgesehen, dass die Dichtungslippen 12, die in axialer Richtung gesehen jeweils am Rand des Dichtungsrings 10 angeordnet sind, zur Mitte des Dichtungsrings 10 geneigt sind, während eine zentrale Dichtungslippe 12 als zweistufiger radialer Vorsprung ausgestaltet ist. Insbesondere handelt es sich um Dichtungsringe 10, die in axialer Richtung gesehen größer sind als 150 mm, bevorzugt größer als 200 mm und besonders bevorzugt größer als 250 mm.

Um den Herstellungsprozess zu vereinfachen und Kosten für ein zum Herstellen herangezogenes Equipment zu reduzieren, ist es vorgesehen, dass zunächst mehrere Teilstreifen 11 mit einem Teilprofil 5', insbesondere mit jeweils identischem Teilprofil 5', extrudiert werden. Dabei ist es vorstellbar, dass die mehreren Teilstreifen 11 nacheinander in einer einzigen Extrudiervorrichtung extrudiert werden. Für ihren Einsatz am Rohr 2 ist es insbesondere vorgesehen, dass die Teilstreifen 11 mit ihren zwei Enden zu einem Teilstreifenring geformt werden, wobei die beiden Ende des Teilstreifens 11 jeweils über ihre Stirnseiten miteinander verbunden werden. Im Anschluss werden die einzelnen Teilstreifenringe derart ausgerichtet und am Rohr 2 angeordnet, dass sie in axialer Richtung gesehen aneinanderliegend das Dichtungsprofil 5 des Dichtungsrings 10 bilden. Insbesondere wird hierzu einer der Teilstreifenringe um eine senkrecht zur axialen Richtung verlaufenden Drehachse um 180° gedreht und beiden Teilstreifenringe nacheinander auf das Rohr 2 aufgeschoben. Dabei treten die aneinander liegenden Teilstreifenringe über eine Kontaktfläche 6 in Kontakt, wobei die Teilprofile 5' der Teilstreifen 5 in dem dargestellten Ausführungsbeispiel in Figur 1 spiegelsymmetrisch zur Kontaktfläche 6 sind. Weiterhin ist es besonderes bevorzugt, dass die Kontaktfläche 6 Teil einer Dichtlippe 12 ist. Dadurch lässt sich eine für die Dichtlippe 12 vorgesehene Verdickung im Dichtungsprofil bzw. Teilprofil als Kontaktfläche 6 nutzen, wodurch eine vergrößerte Anlage der beiden Teilstreifen 11 im Vergleich zu einem Kontaktbereich in einem Bereich ohne Dichtlippe 12 möglich ist. Um zu vermeiden, dass die beiden Teilstreifenringe am Rohr 2 auseinanderrutschen, ist es insbesondere vorgesehen, dass beim Extrudieren auf einer dem Teilprofil 5' gegenüberliegenden Seite eine Oberflächenstruktur, wie z. B. eine Riffelstruktur 13, eine Noppenstruktur oder eine Hinterschneidungen aufweisende Oberflächenstruktur, extrudiert wird. Dadurch wird einer axialen Bewegung der einzelnen Teilstreifenringe entgegengewirkt, so dass ein Kontakt zwischen den Teilstreifenringen im Einsatz aufrecht erhalten bleiben kann. Solange dieser Kontakt besteht kann eine Abdichtung mit den nebeneinander angeordneten Teilstreifenringen sichergestellt werden. Ferner ist es vorstellbar, dass zur Vermeidung eines Rutschens eines oder mehrerer Teilstreifenringe am Rohr 2 oder an einer Rohrmuffe der Teilstreifenring oder mehrere Teilstreifenringe eingegossen werden. Durch die Oberflächenstruktur wird in vorteilhafter Weise hierbei eine gegenüber einer glatten Oberfläche vergrößerte Oberfläche bereitgestellt. Zur Anbindung ans Rohr wird beispielsweise eine stoffschlüssige Verbindung zum Rohr 2 durch ein Harz, ein Gewebe und/oder ein Klebemittel hervorgerufen.

In Figur 2 sind zwei Teilstreifen 11 (oben) und ein aus den zwei Teilstreifen 11 zusammengesetzter Dichtungsring 10 (unten), hergestellt mit einem Verfahren gemäß einer zweiten bevorzugten Ausführungsform der vorliegenden Erfindung, in einer Schnittansicht, deren Schnitt entlang einer senkrecht zur Profilrichtung verlaufenden Ebene verläuft, dargestellt. Insbesondere handelt es sich im Wesentlichen um den Dichtungsring 10 aus Figur 1 mit demselben Dichtungsprofil 5. Der Unterschied zu dem im Figur 1 dargestellten Dichtungsring 10 bildet das Extrudieren und das Zusammensetzen der Teilstreifen 11 zum Ring. Hierbei ist es insbesondere vorgesehen, dass die zwei Teilstreifen 11 zusammen in einer einzigen Extrudiervorrichtung extrudiert werden. Hierbei werden die Teilstreifen 11 derart extrudiert, dass sie nach dem Extrudieren gegenüber einer zwischen den Teilstreifen 11 angeordneten und parallel zur Streifenfläche verlaufenden Ebene spiegelsymmetrisch zueinander angeordnet sind. Die Streifenfläche ist hierbei festgelegt durch eine Haupterstreckungsebene des Teilstreifens. In dem in Figur 2 dargestellten Ausführungsbeispiel ist es vorgesehen, dass die Oberflächenstrukturen der nach dem Extrudieren übereinander angeordneten Teilstreifen 11 einander zugewandt sind. Ferner ist es insbesondere vorgesehen, dass beim Extrudieren neben den zwei Teilstreifen 11 ein Brückenelement 14 extrudiert wird. Dieses Brückenelement 14 dient beispielsweise als Scharnier, insbesondere in Art eines Filmscharniers, beim Zusammensetzen der beiden Teilstreifen 11. Hierzu werden die Teilstreifen 11 mittels des Scharniers beim Zusammensetzen umgeklappt und liegen dann nach dem Umklappen aneinander. In dem in Figur 2 dargestellten Ausführungsbeispiel ist das Brückenelement 14 derart extrudiert, dass es die beiden miteinander zugewandten Oberflächenstrukturen miteinander verbindet. Dadurch bildet das Brückenelement 14 im gefertigten Dichtungsring einen am Rohr 2 anliegenden Teil des Dichtungsrings 10. Zum Fertigen des Dichtungsrings 10 ist es hierbei vorgesehen, dass die Teilstreifen 11 nach dem Zusammensetzen zu einem Ring 2 geformt werden und die zusammengesetzten Teilstreifen 11 über ihre jeweiligen Enden miteinander verbunden werden. Mittels des als Scharnier wirkenden Brückenelements 14 lässt sich in vorteilhafter Weise eine Dichtigkeit, insbesondere beim Einsatz des Dichtungsrings 10 in einer Muffe, erhöhen.

In Figur 3 sind zwei Teilstreifen 11 (oben) und ein aus den zwei Teilstreifen 11 zusammengesetzter Dichtungsring (unten), hergestellt mit einem Verfahren gemäß einer dritten bevorzugten Ausführungsform der vorliegenden Erfindung, in einer Schnittansicht, deren Schnitt entlang einer senkrecht zur Profilrichtung verlaufenden Ebene verläuft, dargestellt. Dabei unterscheiden sich die beiden extrudierten Teilstreifen 11 im Wesentlichen in der Ausrichtung der übereinander angeordneten Teilstreifen 11. Konkret sind die übereinander angeordneten Teilstreifen 11 derart orientiert, dass die Teilprofile 5' aufeinander zugerichtet sind. Ferner ist das als Scharnier vorgesehene Brückenelement 14 im Bereich des Teilprofils 5' bzw. auf einer der Oberflächenstruktur gegenüberliegenden Seite am Teilstreifen 11 angeordnet. Infolgedessen ist das als Scharnier dienende Brückenelement 13 am gefertigten und am Rohr 2 angeordneten Dichtungsring 10 Teil des Dichtungsprofils 5 bzw. auf einer dem Rohr 2 abgewandten Seite des Dichtungsrings 10 angeordnet. Neben dem als Scharnier dienenden Brückenelement 14 ist zudem zusätzlich ein Brückenelement 14, das beim Extrudieren einen Stützsteg bildet, vorgesehen. Dieser Stützsteg wird als Sollbruchstelle zeitlich vor dem Zusammensetzen der Teilstreifen 12 zerstört, damit ein Umklappen der Teilstreifen 11 in die gewünschte Ausrichtung, in der die Teilstreifen 11 unter Bildung des Dichtungsprofils 5 nebeneinander angeordnet sind, möglich ist. Wegen der Ausrichtung der Teilstreifen 11 beim Extrudieren erweist sich dieses Verfahren insbesondere in Hinblick auf eine Profilstabilität beim Extrudieren als besonders vorteilhaft.

In Figur 4 sind ein Teilstreifen 11 und eine weiterer Teilstreifen 11' (oben) sowie ein aus dem Teilstreifen 11 und dem weiteren Teilstreifen 11' zusammengesetzter Dichtungsring 10 (unten), hergestellt mit einem Verfahren gemäß einer vierten bevorzugten Ausführungsform der vorliegenden Erfindung, in einer Schnittansicht, deren Schnitt entlang einer senkrecht zur Profilrichtung verlaufenden Ebene verläuft, dargestellt. Dabei unterscheidet sich das hier dargestellte Verfahren im Wesentlichen von denen, die den Dichtungsringen 10 aus den Figuren 1 bis 3 zugeordnet werden, dahingehend, dass die Kontaktflächen 6 der Teilstreifen 11 derart komplimentär zueinander ausgestaltet bzw. strukturiert werden, dass ein ein Auseinanderrutschen der Teilstreifen unterdrückender Form -und/oder Kraftschluss realisiert wird. D. h. an den zusammengesetzten Teilstreifen 11 sind auf den zueinander zugewandten Kontaktflächen 6 die Außenseiten der Teilstreifens 11 derart ausgeformt bzw. weisen eine derartige Kontur auf, dass Konturverläufe der Kontaktflächen 6 ineinandergreifen, insbesondere passgenau ineinandergreifen. Entsprechend werden der Teilstreifen 11 und der weitere Teilstreifen 11' beispielswiese in separaten Extrudiervorgängen hergestellt. In dem in Figur 4 dargestellten Beispiel ist der Konturverlauf des Teilstreifens 11 zumindest teilweise konvex und der Konturverlauf der weiteren Teilstreifens 11' zumindest teilweise konkav ausgeprägt. Hierbei ist es auch vorstellbar, dass zunächst zwei identische Teilstreifen 11 mit einem zumindest teilweise konkav verlaufenden Konturverlauf im Bereich der Kontaktfläche 6 extrudiert werden und in einem Zwischenschritt ein Einsatzteil 17 im Bereich der konkav verlaufenden Kontur an einem Teilstreifen 11 angeordnet wird, beispielsweise angeklebt wird.

In Figur 5 sind ein Teilstreifen 11 und eine weiterer Teilstreifen 11' (oben) sowie ein aus dem Teilstreifen 11 und dem weiteren Teilstreifen 11' zusammengesetzter Dichtungsring 10 (unten), hergestellt mit einem Verfahren gemäß einer fünften bevorzugten Ausführungsform der vorliegenden Erfindung, in einer Schnittansicht, deren Schnitt entlang einer senkrecht zur Profilrichtung verlaufenden Ebene verläuft, dargestellt. Hierbei ist es - wie aus dem Ausführungsbeispiel aus Figur 4 bekannt - vorgesehen, dass jeweilige Konturverläufe an den Kontaktflächen 6 für einen den Zusammenhalt der zusammengesetzten Teilstreifen 11 unterstützenden Form- und/oder Kraftschluss ausgeprägt sind. Hierbei wird der Form- und Kraftschluss durch komplementär zueinander ausgestaltete Vorsprünge 16 und Hinterschneidungen 15 realisiert. Hierzu werden beim Extrudieren diese Vorsprünge 16 und die Hinterschneidungen 15 jeweils an der Kontaktfläche 6 des Teilstreifens 11 und des weiteren Teilstreifens 11' realisiert. Vorzugsweise sind die einzelnen Hinterschneidungen 15 bzw. Vorsprünge 16 regelmäßig über die Kontaktfläche 6 verteilt. Im vorliegenden Ausführungsbeispiel sind die Hinterschneidungen 15 ausschließlich am weiteren Teilstreifen 11' angeordnet, während die Vorsprünge 16 ausschließlich am Teilstreifen 11 angeordnet sind. Alternativ ist es auch vorstellbar, dass der Teilstreifen 11 und der weiterer Teilstreifen11' jeweils sowohl Hinterschneidungen 15 als auch Vorsprünge 16 aufweisen.

In der Figur 6 ist ein Teilstreifen 11 und ein weiterer Teilstreifen 11' (oben) sowie ein aus dem Teilstreifen 11 und dem weiteren Teilstreifen 11' zusammengesetzter Dichtungsring 10 (unten) dargestellt, hergestellt mit einem Verfahren gemäß einer sechsten bevorzugten Ausführungsform der vorliegenden Erfindung, in einer Schnittansicht, deren Schnitt entlang einer senkrecht zur Profilrichtung verlaufenden Ebene verläuft. Hierbei ist als Einsatzteil 17 ein keilförmiges Element vorgesehen, wobei das keilförmige Element in Richtung des Dichtungsprofis verjüngt. Entsprechend der Neigung der Seitenflächen des keilförmigen Elements werden beim Extrudieren die Kontaktflächen der Teilstreifen schräg extrudiert.

In der Figur 7 ist ein Teilstreifen 11 und ein weiterer Teilstreifen 11' (oben) sowie ein aus dem Teilstreifen 11 und dem weiteren Teilstreifen 11' zusammengesetzter Dichtungsring 10 (unten) dargestellt, hergestellt mit einem Verfahren gemäß einer siebten bevorzugten Ausführungsform der vorliegenden Erfindung, in einer Schnittansicht, deren Schnitt entlang einer senkrecht zur Profilrichtung verlaufenden Ebene verläuft. Im Wesentlichen entspricht die siebte Ausführungsform der sechsten Ausführungsform aus Figur 6. Statt eines keilförmigen Elements als Einsatzteil 17 weist die siebte Ausführungsform ein Bauteil mit einem rechteckigen Fundament und mit einem von dem rechteckigen Element abstehenden elliptischen Kopfstück in der Schnittansicht auf. Dabei erstreckt sich das Kopfstück über mehr als die Hälfte der Kontaktflächen 6 des Teilstreifens 11 bzw. des weiteren Teilstreifens 11'. Entsprechend der Form des Bauteils werden beim Extrudieren die Kontaktflächen 6 komplementär extrudiert, wie es in der oberen Abbildung der Figur 7 zu erkennen ist.

In der Figur 8 ist ein aus dem Teilstreifen 11 und dem weiteren Teilstreifen 11' zusammengesetzter Dichtungsring 10 (unten) dargestellt, hergestellt mit einem Verfahren gemäß einer achten bevorzugten Ausführungsform der vorliegenden Erfindung, in einer Schnittansicht, deren Schnitt entlang einer senkrecht zur Profilrichtung verlaufenden Ebene verläuft. Im Wesentlichen entspricht die siebte Ausführungsform der sechsten Ausführungsform aus Figur 6. Statt des Einsatzteils 17 weist die achte Ausführungsform jedoch ein Zwischenelement 18 auf. Im Gegensatz zum Einsatzteil 17 erstreckt sich das Zwischenelement 18 im zusammengesetzten Zustand sowohl auf der Seite mit dem Dichtungsprofil 5 als auch auf der gegenüberliegenden Seite mit der Oberflächenstruktur. Hierbei trägt das Zwischenelement 18 zur Profilbildung des Dichtungsprofils 5 bei. Ferner weisen die Kontaktflächen 6 und das Zwischenelement 18 komplementär zueinander verlaufende Schrägen auf.

### Bezugszeichenliste

- 2: Rohr
- 5: Dichtungsprofil
- 5': Teilprofil
- 10: Dichtungring
- 11: Teilstreifen
- 11': weiterer Teilstreifen
- 12: Dichtungslippe
- 13: Riffelstruktur
- 14: Brückenelement
- 15: Hinterschneidung
- 16: Vorsprung
- 17: Einsatzteil
- 18: Zwischenelement

## Patentansprüche

1. Verfahren zur Herstellung eines Dichtungsrings (10) mit einem Dichtungsprofil (5), insbesondere zur Herstellung eines Dichtungsrings (10) für ein Rohr (2) oder für ein zusammensteckbares Rohrsystem, umfassend die Verfahrensschritte:
-- Extrudieren eines Teilstreifens (11) mit einem Teilprofil (5') in Profilrichtung
-- Zusammensetzen mehrerer Teilstreifen (11) in einer senkrecht zur Profilrichtung verlaufenden Querrichtung unter Bildung des Dichtungsprofils (5') und
-- Formen eines Rings aus dem Teilstreifen (11) oder mehreren zusammengesetzten Teilsteifen (11).

2. Verfahren gemäß Anspruch 1, wobei beim Extrudieren der Teilstreifen (11) derart ausgestaltet wird, dass die zusammengesetzten Teilstreifen (11) dichtend zusammenhalten, insbesondere kraft-, form- und/oder stoffschlüssig dichtend zusammenhalten.

3. Verfahren gemäß einem der vorhergehenden Ansprüche, wobei die Teilprofile (5') mehrerer Teilstreifen (11) identisch sind.

4. Verfahren gemäß einem der vorhergehenden Ansprüche, wobei beim Extrudieren am Teilstreifen (11) auf einer dem Teilprofil (5') gegenüberliegenden Seite eine Oberflächenstruktur, insbesondere eine Riffelstruktur (13), eine Noppenstruktur und/oder eine einen Hinterschnitt aufweisende Oberflächenstruktur, ausgebildet wird.

5. Verfahren gemäß einem der vorhergehenden Ansprüche, wobei mehrere Teilstreifen (11) zusammen mit mindestens einem die mehreren Teilstreifen (11) verbindenden Brückenelement (14) gemeinsam in einer Extrudiervorrichtung hergestellt werden, wobei insbesondere beim Positionieren der mehreren Teilstreifen (11) zueinander zwei Teilstreifen (11) mittels eines als Scharnier wirkenden Brückenelements (14) umgeklappt werden.

6. Verfahren gemäß Anspruch 5, wobei ein beim Extrudieren als Stützsteg dienendes Brückenelement zeitlich vor dem Zusammensetzen zerstört wird.

7. Verfahren gemäß einem der vorhergehenden Ansprüche, wobei neben dem Teilstreifen (11) ein weiterer Teilstreifen (11') extrudiert wird, wobei der Teilstreifen (11) und der weitere Teilstreifen (11') beim Zusammensetzen zur Vermeidung eines axialen Relativversatzes zwischen dem Teilstreifen (11) und dem weiteren Teilstreifen (11') im gefertigten Dichtungsring über jeweilige Kontaktflächen (6) des Teilstreifens (11) und des weiteren Teilstreifens (11') form- und/oder kraft- und/oder stoffschlüssig miteinander verbunden werden.

8. Verfahren gemäß Anspruch 6, wobei beim Extrudieren für eine form-und/oder kraftschlüssige Verbindung am Teilstreifen (11) und am weiteren Teilstreifen (11') komplementäre Kontaktflächen (6) vorgesehen werden.

9. Verfahren gemäß Anspruch 7 oder 8, wobei zur Bildung komplementärer Kontaktflächen in einem Zwischenschritt ein konturbildendes Einsatzteil (17) an dem Teilstreifen angeordnet wird.

10. Verfahren gemäß einem der Ansprüche 6 oder 7, wobei beim Extrudieren an der Kontaktfläche (6) eine Hinterschneidung (15) und/oder ein Vorsprung (16) realisiert wird.

11. Verfahren gemäß einem der vorhergehenden Ansprüche, wobei das Dichtungsprofil (5) ein System aus Dichtlippen (12) bildet, wobei im zusammengesetzten Zustand die Kontaktflächen (6) zweier Teilstreifen (11) oder die Kontaktfläche (5) des Teilstreifens (11) und des weiteren Teilstreifens (11') im Bereich einer Dichtungslippe (12) angeordnet sind.

12. Verfahren gemäß einem der vorhergehenden Ansprüche, wobei die Teilringe am Rohr oder einer Rohrmuffe zusammengesetzt werden.

13. Verfahren gemäß einem der vorhergehenden Ansprüche, wobei sich der Dichtungsring (10) in axialer Richtung mehr als 150 mm, bevorzugt mehr als 200 mm und besonders bevorzugt mehr als 250 mm erstreckt.

14. Dichtungsring (10), insbesondere hergestellt mit einem Verfahren gemäß einem der vorhergehenden Ansprüche, wobei der Dichtungsring (10) einen sich in Umlaufrichtung erstreckenden Verbindungsbereich aufweist.
